# EUROPÄISCHE PATENTSCHRIFT

(11) **EP 3 650 211 B1**
(45) Veröffentlichungstag und Bekanntmachung des Hinweises auf die Patenterteilung: **22.09.2021**
(21) Anmeldenummer: 19206332.9
(22) Anmeldetag: 30.10.2019
(51) Int. Cl.: B30B 9/26, B30B 9/12, B01D 29/44, B01D 29/03

(54) **VORRICHTUNG ZUR ANORDNUNG VON SEIHERSTÄBEN**
DEVICE FOR ARRANGING STRAINER BARS
DISPOSITIF D'AGENCEMENT DES BARRES DE FILTRE À TAMIS

(30) Priorität: 07.11.2018 DE 202018106329 U
(43) Veröffentlichungstag der Anmeldung: 13.05.2020
(73) Patentinhaber: De Smet Rosedowns Ltd., Hull, North Humberside HU2 0AD (GB)
(72) Erfinder: Lennard, Münch, 27283 Verden (DE)
(74) Vertreter: Eisenführ Speiser

(56) Entgegenhaltungen:
- EP-A1- 3 357 677
- CN-U- 203 580 173
- DE-B- 1 275 283
- FR-A1- 2 656 566
- GB-A- 1 000 773

## Beschreibung

Die Erfindung betrifft eine Vorrichtung zur Anordnung von Seiherstäben innerhalb eines in einem Kompressionsraum einer Presse mit einer Schnecke für die Verarbeitung von tierischem und/oder pflanzlichem Material zu Fleischmehl und/oder Tierfett u.dgl. vorgesehenen Seiherkorbabschnittes gemäß Oberbegriff von Anspruch 1.

Es ist bekannt, bei Anlagen für die Verarbeitung von tierischem und/oder pflanzlichem Material bzw. von tierischen und/oder pflanzlichen Stoffen oder Abfällen insbesondere zur Gewinnung von Fleischmehl und/oder Tierfett und/oder Öl aus Ölsaaten bzw. Ölsamen u.dgl. Schneckenpressen zu verwenden. In derartigen Schneckenpressen werden um ihre Längs- bzw. Mittelachse rotierende Schnecken eingesetzt, deren Kerndurchmesser von der Zuführ- oder Austrittsöffnung hin ansteigt, wobei an der Außenoberfläche der Schnecke die Schneckenwindungen in unterschiedlichen Ausführungen ausgebildet sein können und einen Kompressionsraum bilden. Der Kompressionsraum wird von der Innenseite eines Gehäuses umgeben, wobei die Innenseite des Gehäuses mit Abschnitten versehen ist, die als Seiherkorb oder Seiherkorbabschnitt bezeichnet werden. Der Seiherkorb bzw. Seiherkorbabschnitt nimmt eine Seiherstab-Anordnung auf, die aus einer Mehrzahl von Seiherstäben gebildet ist, welche sich im Wesentlichen in Förderrichtung der Schneckenpresse erstrecken und quer zu ihrer Längserstreckung nebeneinanderliegen. Der den Kompressionsraum umhüllende Seiherkorb bzw. Seiherkorbabschnitt bildet mit den eingelegten Seiherstäben eine Siebfläche für die abzutrennende Flüssigkeit, wobei durch Abstandshalter, die bevorzugt von dünnen Distanzblättchen gebildet sind, zwischen den Seiherstäben freie Austrittsschlitze erzeugt werden. Die Seiherstäbe werden bevorzugt aus ihrer ursprünglichen rechteckigen Form hochkant eingelegt und sind nach außen verjüngt ausgebildet, um der Flüssigkeit und den eventuell mitgeführten Feinstteilchen den Austritt zu erleichtern.

Da das Gehäuse der Schneckenpresse bevorzugt aus zwei Gehäusehälften besteht, sind auch die an der Innenseite des Gehäuses ausgebildeten Seiherkorbabschnitte in entsprechende Seiherkorbhälften unterteilt. Die Befestigung der Seiherstäbe erfolgt durch Klemmleisten, die an der Trennfuge der Seiherkorbhälften fixiert, bevorzugt verschraubt, werden und dabei eine Vorspannung auf die Seiherstab-Anordnung winklig, bevorzugt quer, zur Förderrichtung ausüben, wodurch die Seiherstäbe in Klemmeingriff miteinander gebracht werden.

Das Einlegen der Seiherstäbe und das anschließende Arretieren und Verspannen der so gebildeten Seiherstab-Anordnung ist jedoch aufwendig und erfordert zudem auch noch eine gewisse Geschicklichkeit.

Eine Vorrichtung der eingangs genannten Art ist aus der DE 12 75 283 B bekannt, die den nächstkommenden Stand der Technik bildet, von dem die vorliegende Erfindung ausgeht.

Des Weiteren offenbart die EP 3 357 677 A1 eine Vorrichtung zum Pressen, die einen Seiherstabkorb mit einer Mehrzahl von Seiherstäben aufweist. Vor dem Einbau in den Seiherstabkorb wird aus einer Mehrzahl von Seiherstäben ein Seiherstabpaket gebildet, das zusätzlich zu mindestens einem aus den Seiherstäben bestehenden Seiherstabset eine Setvorrichtung aufweist, die die Seiherstäbe des Seiherstabsets derart fixiert, dass das Seiherstabpaket eine zumindest temporäre Baueinheit ist.

Es ist eine Aufgabe der vorliegenden Erfindung, Maßnahmen vorzuschlagen, mit denen sich das Einlegen der Seiherstäbe in einen Seiherkorbabschnitt und auch das Wechseln der Seiherstäbe vereinfachen lässt.

Vorgeschlagen wird zur Lösung dieser Aufgabe gemäß der vorliegenden Erfindung eine Vorrichtung zur Anordnung von Seiherstäben innerhalb eines in einem Kompressionsraum einer Presse mit einer Schnecke für die Verarbeitung von tierischen und/oder pflanzlichen Abfällen zu Fleischmehl und/oder Tierfett u.dgl. vorgesehenen Seiherkorbabschnittes, mit mindestens einem Aufnahmeelement, das eine Außenseite, die zur Anordnung im Seiherkorbabschnitt ausgebildet ist, eine Innenseite, die zur Aufnahme einer Seiherstab-Anordnung aus einer Mehrzahl von quer zu ihrer Längserstreckung nebeneinanderliegenden Seiherstäben ausgebildet ist, und ein erstes Ende und ein zweites Ende aufweist, wobei die ersten und zweiten Enden in einer Richtung winklig oder quer zur Längserstreckung der von der Innenseite des mindestens einen Aufnahmeelementes aufzunehmenden Seiherstäbe voneinander beabstandet sind, und mit einem ersten Klemmelement und einem zweiten Klemmelement, wobei am ersten Ende des mindestens einen Aufnahmeelementes das erste Klemmelement und am zweiten Ende des mindestens einen Aufnahmeelementes das zweite Klemmelement derart befestigbar ist, dass das erste Klemmelement mit einem ersten außenliegenden Seiherstab, der ein erstes Ende der von der Innenseite des mindestens einen Aufnahmeelementes aufzunehmenden Seiherstab-Anordnung bildet, in Eingriff bringbar ist und das zweite Klemmelement mit einem zweiten außenliegenden Seiherstab, der ein vom ersten Ende der Seiherstab-Anordnung entfernt gelegenes zweites Ende der von der Innenseite des mindestens einen Aufnahmeelementes aufzunehmenden Seiherstab-Anordnung bildet, in Eingriff bringbar ist und dabei die ersten und zweiten Klemmelemente die von der Innenseite des mindestens einen Aufnahmeelementes aufzunehmenden Seiherstab-Anordnung mit einem Druck in einer Richtung winklig oder quer zur Längserstreckung der Seiherstäbe beaufschlagen, und mit mindestens einem Verbindungselement, das mit einem ersten Abschnitt, vorzugsweise einem ersten Ende, am ersten Klemmelement und mit einem zweiten Abschnitt, vorzugsweise einem zweiten Ende, am zweiten Klemmelement lösbar befestigbar ist, dadurch gekennzeichnet, dass das mindestens eine Verbindungselement Griff ausgebildet ist.

Mit Hilfe der erfindungsgemäßen Vorrichtung wird eine Seiherkorbeinlage geschaffen, durch die die zunächst aus losen nebeneinanderliegenden Seiherstäben gebildete Seiherstab-Anordnung zu einem stabilen Paket konfiguriert wird, welches dann im zugehörigen Seiherkorbabschnitt innerhalb des Gehäuses der Schneckenpresse nur noch einfach platziert werden muss. Hierzu werden bei der erfindungsgemäßen Vorrichtung zunächst die Seiherstäbe, quer zu ihrer Längserstreckung nebeneinanderliegend, auf der Innenseite des mindestens einen Aufnahmeelementes angeordnet, so dass die Innenseite des Aufnahmeelementes die so gebildete Seiherstab-Anordnung aufnimmt. Anschließend wird das erste Klemmelement am ersten Ende des Aufnahmeelementes und das zweite Klemmelement am zweiten Ende des Aufnahmeelementes angeordnet und befestigt und dabei die von der Innenseite des mindestens einen Aufnahmeelementes aufgenommene Seiherstab-Anordnung mit einem Druck in einer Richtung winklig oder quer zur Längserstreckung der Seiherstäbe beaufschlagt, wodurch die Seiherstäbe, die bis zu diesem Zeitpunkt noch lose auf der Innenseite des Aufnahmeelementes lagen und von diesem aufgenommen sind, nun gespannt werden. Nachdem auf diese Weise die erfindungsgemäße Vorrichtung mit den Seiherstäben fertig bestückt worden ist, kann sie in den Seiherkorbabschnitt eingebaut werden, indem sie als ganze Einheit in eine vorbestimmte Position im Seiherkorbabschnitt gelegt und anschließend dort arretiert und befestigt wird.

Zur Stabilisierung der Vorrichtung ist die Vorrichtung mit mindestens einem Verbindungselement versehen, das mit einem ersten Abschnitt, vorzugsweise einem ersten Ende, am ersten Klemmelement und mit einem zweiten Abschnitt, vorzugsweise einem zweiten Ende, am zweiten Klemmelement lösbar befestigbar ist. Für eine noch bessere Handhabung beim Einsetzen der Vorrichtung in den Seiherkorbabschnitt und beim Herausnehmen der Vorrichtung ist das mindestens eine Verbindungselement als Griff ausgebildet. Das mindestens eine Verbindungselement wird spätestens dann an der Vorrichtung montiert, bevor sie im Seiherkorbabschnitt platziert wird. Nach Anordnung im Seiherkorbabschnitt und vor Inbetriebnahme der Schneckenpresse ist das mindestens eine Verbindungselement wieder zu entfernen, da es ansonsten den Betrieb der Schnecke stören würde, wozu die Befestigung des mindestens einen Verbindungselementes an den ersten und zweiten Klemmelementen lösbar gestaltet ist.

Durch Verwendung der erfindungsgemäßen Vorrichtung lässt sich somit sowohl das Einlegen als auch das Wechseln der Seiherstäbe deutlich vereinfachen. Des Weiteren wird mit Hilfe der Erfindung der Seiherkorbabschnitt geschont und lässt sich die Lagerhaltung optimieren.

Bevorzugte Ausführungen und Weiterbildungen der Erfindung sind in den abhängigen Ansprüchen angegeben.

Da bevorzugt die Innenseite des Schneckenpressengehäuses und somit auch der Seiherkorbabschnitt eine rotationssymmetrische, insbesondere zylindrische, Form aufweist, ist es zweckmäßig, dem mindestens einen Aufnahmeelement eine gekrümmte bzw. gebogene Form zu verleihen, so dass dessen Außenseite eine konvexe Seite und dessen Innenseite eine konkave Seite bildet, wobei bevorzugt das mindestens eine Aufnahmeelement entlang eines Teilkreises, vorzugsweise entlang eines Halbkreises, gekrümmt ist.

Bevorzugt ist das Aufnahmeelement als flächiges Element und insbesondere als Streifen oder Leiste ausgebildet. Allerdings darf das Aufnahmeelement die Siebwirkung der Seiherstab-Anordnung zumindest nicht wesentlich beeinträchtigen, so dass insbesondere für den Fall, dass das Aufnahmeelement als flächiges Element ausgebildet ist, vorzugsweise das Aufnahmeelement mit Löchern oder Perforationen zu versehen ist.

Ferner kann das erste Ende des mindestens einen Aufnahmeelementes einen ersten Endabschnitt, an dem das erste Klemmelement befestigbar ist, und das zweite Ende des mindestens einen Aufnahmeelementes einen zweiten Endabschnitt aufweisen, an dem das zweite Klemmelement befestigbar ist.

Alternativ ist es aber auch denkbar, mehrere Aufnahmeelemente vorzusehen, die in Richtung der Längserstreckung der von der Innenseite der Aufnahmeelemente aufzunehmenden Seiherstäbe nebeneinander angeordnet und an ihrem ersten Ende über einen gemeinsamen ersten Endabschnitt und an ihrem zweiten Ende über einen gemeinsamen zweiten Endabschnitt miteinander verbunden sind und das erste Klemmelement am gemeinsamen ersten Endabschnitt und das zweite Klemmelement am gemeinsamen zweiten Endabschnitt befestigbar ist. Insbesondere sind die Aufnahmeelemente voneinander beabstandet angeordnet, wodurch zwischen jeweils zwei benachbarten Aufnahmeelementen ein ausreichender Zwischenraum verbleibt, um die Siebwirkung der Seiherstab-Anordnung im Wesentlichen nicht zu beeinträchtigen. Bei dieser Ausführung lässt sich die effektive Aufnahmefläche zur Aufnahme der Seiherstab-Anordnung vergrößern, während gleichzeitig im Verhältnis hierzu Material und Gewicht eingespart werden; dabei dienen die gemeinsamen ersten und zweiten Endabschnitte für eine Konfiguration der mehreren Aufnahmeelemente zu einer stabilen Einheit, da deren Enden über die gemeinsamen Endabschnitte miteinander verbunden sind.

Bevorzugt können sich der erste Endabschnitt und der zweite Endabschnitt jeweils über die Außenseite des Aufnahmeelementes hinaus flanschartig nach außen erstrecken, wodurch sie gleichzeitig in geschickter und somit vorteilhafter Weise zur Befestigung der Vorrichtung am Seiherkorbabschnitt verwendet werden können.

Ferner kann sich der erste Endabschnitt und der zweite Endabschnitt in Richtung der Längserstreckung der von der Innenseite des Aufnahmeelementes aufzunehmenden Seiherstäbe erstrecken.

Vorzugsweise kann der erste Endabschnitt und der zweite Endabschnitt jeweils als flächiges Element ausgebildet sein und insbesondere die Form einer Leiste aufweisen.

Bevorzugt erstrecken sich das erste Klemmelement und das zweite Klemmelement in Richtung der Längserstreckung der von der Innenseite des Aufnahmeelementes aufzunehmenden Seiherstäbe.

Ferner kann das erste Klemmelement und das zweite Klemmelement jeweils als flächiges Element ausgebildet sein und insbesondere die Form einer Leiste haben, wodurch sich eine flächige und somit besonders gute Klemmwirkung und dadurch bedingte Beaufschlagung der Seiherstab-Anordnung mit Spannkraft ergibt.

Wie bereits zuvor angesprochen, können die ersten und zweiten Klemmelemente zusätzlich auch noch zur Befestigung der Vorrichtung am Seiherkorbabschnitt vorgesehen sein, wozu dann die ersten und zweiten Klemmelemente jeweils erste Befestigungsmittel zur lösbaren Befestigung der Vorrichtung am Seiherkorb aufweisen. Bei einer Weiterbildung dieser Ausführung weisen das erste Ende oder der erste Endabschnitt und das zweite Ende oder der zweite Endabschnitt jeweils zweite Befestigungsmittel auf, die zur lösbaren Befestigung der Vorrichtung am Seiherkorbabschnitt mit den ersten Befestigungsmitteln der ersten und zweiten Klemmelemente zusammenwirken. Hierzu können die ersten und zweiten Befestigungsmittel jeweils Bohrungen aufweisen, die so angeordnet sind, dass zur lösbaren Befestigung der Vorrichtung am Seiherkorbabschnitt jeweils eine Bohrung der ersten Befestigungsmittel und eine Bohrung der zweiten Befestigungsmittel in fluchtende Ausrichtung miteinander für eine gemeinsame Aufnahme eines Befestigungselementes, insbesondere einer Schraube, zur lösbaren Befestigung am Seiherkorbabschnitt bringbar ist. Bei dieser zuletzt genannten Weiterbildung lässt die Vorrichtung mit Hilfe der Befestigungselemente, die jeweils dann gleichzeitig durch eine Bohrung der ersten Befestigungsmittel und eine Bohrung der zweiten Befestigungsmittel gesteckt sind, am Seiherkorbabschnitt lösbar befestigen, indem sie die ersten und zweiten Klemmelemente unter Zwischenlage der ersten und zweiten Enden bzw. der ersten und zweiten Endabschnitte des mindestens einen Aufnahmeelementes am Seiherkorbabschnitt fixieren.

Das mindestens eine Verbindungselement ist bevorzugt als länglicher Stab ausgebildet.

Bei einer Weiterbildung dieser Ausführung sind dritte Befestigungsmittel an dem mindestens einen Verbindungselement, vierte Befestigungsmittel jeweils an den und zweiten Klemmelementen und fünfte Befestigungsmittel jeweils an den ersten und zweiten Enden bzw. ersten und zweiten Endabschnitten des mindestens einen Aufnahmeelementes vorgesehen, wobei die dritten bis fünften Befestigungsmittel miteinander zusammenwirken, um nicht nur das mindestens eine Verbindungselement am ersten Klemmelement und am zweiten Klemmelement, sondern gleichzeitig auch noch das erste Klemmelement am ersten Ende bzw. am ersten Endabschnitt und das zweite Klemmelement am zweiten Ende bzw. am zweiten Endabschnitt des mindestens einen Aufnahmeelementes lösbar zu befestigen.

Bei einer Weiterbildung weisen die dritten Befestigungsmittel, die vierten Befestigungsmittel und die fünften Befestigungsmittel jeweils Bohrungen auf, die so angeordnet sind, dass zur lösbaren Befestigung des mindestens einen Verbindungselementes an den ersten und zweiten Klemmelementen sowie gleichzeitig der ersten und zweiten Klemmelemente an dem mindestens einen Aufnahmeelement jeweils eine Bohrung der dritten Befestigungsmittel, eine Bohrung der vierten Befestigungsmittel und eine Bohrung der fünften Befestigungsmittel in fluchtende Ausrichtung miteinander für eine gemeinsame Aufnahme eines Befestigungselementes, insbesondere einer Schraube, zur lösbaren Befestigung des mindestens einen Verbindungselementes an den ersten und zweiten Klemmelementen und gleichzeitig der ersten und zweiten Klemmelemente an dem mindestens einen Aufnahmeelement bringbar sind. Somit sorgt bei dieser Weiterbildung eine Befestigung des mindestens einen Verbindungselementes an den ersten und zweiten Klemmelementen gleichzeitig auch für eine Befestigung der ersten und zweiten Klemmelemente an den ersten und zweiten Enden bzw. Endabschnitten des mindestens einen Aufnahmeelementes, so dass auf diese Weise die Vorrichtung zu einer transportablen, stabilen und eigenständigen Einheit konfiguriert wird, welche sich dann mit Hilfe des nun auch gleichzeitig als Griff zu verwendenden mindestens einen Verbindungselementes an der gewünschten Stelle in den Seiherkorbabschnitt einsetzen lässt.

Bei einer bevorzugten Weiterbildung sind die Bohrungen der dritten Befestigungsmittel und der vierten Befestigungsmittel als Durchgangsbohrungen und die Bohrungen der fünften Befestigungsmittel als Gewindebohrungen für den Schraubeingriff eines als Schraube vorgesehenen Befestigungselementes ausgebildet. Somit werden bei dieser Weiterbildung der mindestens eine Griff und die ersten und zweiten Klemmelemente mit Hilfe von Schrauben an die ersten und zweiten Enden bzw. Endabschnitte des mindestens einen Aufnahmeelementes angeschraubt. Nachfolgend wird ein bevorzugtes Ausführungsbeispiel der Erfindung anhand der beiliegenden Zeichnungen näher erläutert. Es zeigen:
- Fig. 1: in auseinandergezogener perspektivischer Darstellung eine Seiherkorbeinlage gemäß einem bevorzugten Ausführungsbeispiel der Erfindung; und
- Fig. 2: in perspektivischer Darstellung eine Ansicht auf die Innenseite einer Gehäusehälfte für eine Schneckenpresse mit einer ersten Seiherkorbeinlage gemäß Fig. 1 im nicht montierten Zustand und einer zweiten Seiherkorbeinlage in einem in der Gehäusehälfte montierten Zustand.

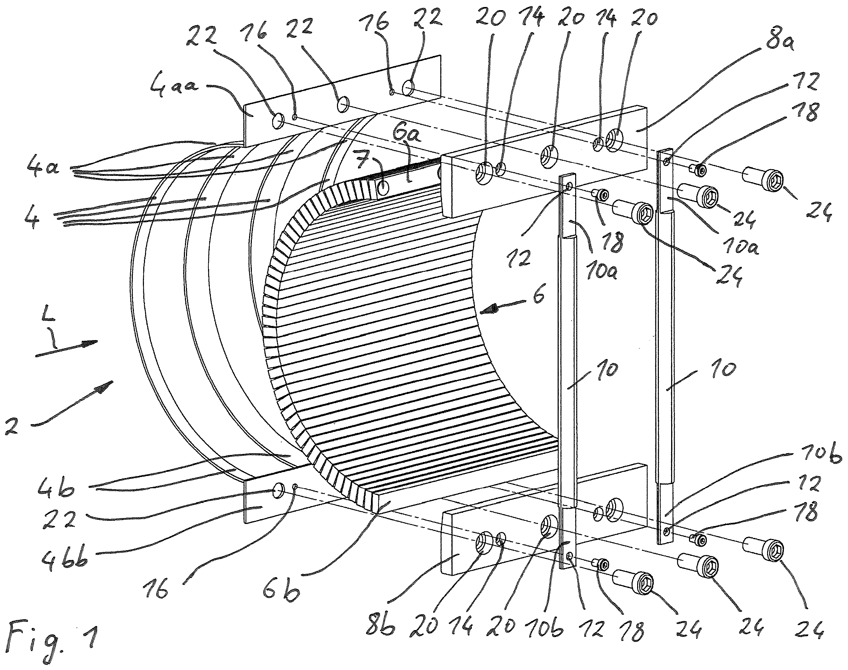

In Fig. 1 ist eine Seiherkorbeinlage 2 gemäß einem bevorzugten Ausführungsbeispiel abgebildet. Die Seiherkorbeinlage 2 weist mehrere in Richtung des Pfeils L nebeneinanderliegende und voneinander beabstandete sowie sich quer zur Orientierung des Pfeils L erstreckende streifenförmige Aufnahmeelemente 4 auf. Die streifenförmigen Aufnahmeelemente 4 sind etwa halbkreisförmig gekrümmt und liegen aufgrund ihrer parallelen Anordnung in einer virtuellen gemeinsamen halbzylindrischen Ebene. Im dargestellten Ausführungsbeispiel sind vier voneinander beabstandete Aufnahmeelemente 4 vorgesehen. Grundsätzlich ist es aber auch denkbar, eine höhere oder auch niedrigere Anzahl von Aufnahmeelementen 4 vorzusehen oder ggf. auch nur ein einziges Aufnahmeelement vorzusehen, das als ein entsprechend breites durchgängiges flächiges Element ausgebildet ist. Allerdings gerade im letztgenannten Fall sollte das als einziges flächiges Element vorgesehene Aufnahmeelement mit Löchern oder Perforationen versehen sein, um die Siebwirkung einer nachstehend noch näher beschriebenen Seiherstab-Anordnung nicht zu beeinträchtigen; aus diesem Grunde sollte auch der Abstand zwischen mehreren vorgesehenen Aufnahmeelementen 4 ausreichend groß sein.

Die Aufnahmeelemente 4 weisen ein erstes Ende 4a und ein von diesem entfernt gelegenes zweites Ende 4b auf. Wie Fig. 1 ferner erkennen lässt, sind die voneinander beabstandeten Aufnahmeelemente 4 über einen ersten Endabschnitt 4aa, der im dargestellten Ausführungsbeispiel als leistenförmiges Element ausgebildet und sich in Richtung des Pfeils L erstreckt, und an ihrem gegenüberliegenden Ende 4b über einen zweiten Endabschnitt 4bb, der ebenfalls als leistenförmiges Element ausgebildet ist und sich in Richtung des Pfeils L erstreckt, miteinander verbunden, wodurch im dargestellten Ausführungsbeispiel die Anordnung aus den voneinander beabstandeten Aufnahmeelementen 4 eine stabile Struktur erhält. Die leistenförmigen Endabschnitte 4aa, 4bb ragen jeweils in radialer Richtung über die Außenseite der Aufnahmeelemente 4 hinaus flanschartig nach außen und liegen in einer gemeinsamen virtuellen Ebene, die zugleich auch eine virtuelle Durchmesser-Ebene im Hinblick auf die Halbkreisform der Aufnahmeelemente 4 bildet.

Aufgrund der Perspektive von Fig. 1 ist von den Aufnahmeelementen 4 nur die Innenseite 4c erkennbar abgebildet, bei der es sich aufgrund der Krümmung der Aufnahmeelemente 4 gleichzeitig auch um die konkave Seite der Aufnahmeelemente 4 handelt. Somit bildet die in den Figuren nicht erkennbare Außenseite der Aufnahmeelemente 4 auch gleichzeitig deren konvexe Seite. Die konkave Innenseite 4c der Aufnahmeelemente 4 dient zur Aufnahme einer Seiherstab-Anordnung 6, die aus einer Mehrzahl von quer zu ihrer Längserstreckung gemäß Pfeil L nebeneinanderliegenden Seiherstäben gebildet ist, von denen in Fig. 1 nur die beiden jeweils außenliegenden Seiherstäbe mit dem Bezugszeichen "6a" bzw. "6b" gekennzeichnet sind. Die Seiherstab-Anordnung 6 bildet eine Siebfläche für die im eingebauten Zustand in einer Schneckenpresse abzutrennende Flüssigkeit, indem zwischen den einzelnen Seiherstäben freie Austrittsschlitze vorgesehen sind. Die Austrittsschlitze werden durch dünne Distanzblättchen zwischen den Seiherstäben erzeugt, wobei stellvertretend für derartige dünne Distanzblättchen in Fig. 1 nur ein Distanzblättchen 7 an der Langseite des ersten außenliegenden Seiherstabes 6a erkennbar abgebildet ist. Wie Fig. 1 ferner schematisch erkennen lässt, bestehen die Seiherstäbe aus einem sich in Längsrichtung gemäß Pfeil L erstreckenden länglichen Körper mit einem rechteckigen Querschnitt und werden zur Bildung der Seiherstab-Anordnung 6 aus ihrer ursprünglichen rechteckigen Form hochkant auf die konkave Innenseite 4c der gekrümmten Aufnahmeelemente 4 aufgelegt, wobei sie gewöhnlich nacheinander auf der Innenseite 4c der Aufnahmeelemente 4 angeordnet werden. Aufgrund der halbkreisförmig gebogenen Form der Aufnahmeelemente 4 erhält somit auch die Seiherstab-Anordnung eine entsprechend halbzylindrische Form, wie Fig. 1 in der auseinandergezogenen Darstellung erkennen lässt.

Ferner sind eine erste Klemmleiste 8a und eine zweite Klemmleiste 8b vorgesehen. Die erste Klemmleiste 8a ist am ersten Endabschnitt 4aa und somit auch am ersten Ende 4a der Aufnahmeelemente 4 derart befestigbar, dass sie mit den dünnen Distanzblättchen 7 an der benachbarten Langseite des ersten außenliegenden Seiherstabes 6a in berührenden Eingriff bringbar ist. Ferner ist die zweite Klemmleiste 8b am zweiten Endabschnitt 4bb und somit am zweiten Ende 4b der Aufnahmeelemente 4 derart befestigbar, dass sie in berührenden Eingriff mit der benachbarten Langseite des zweiten außenliegenden Seiherstabes 6b bringbar ist. Dabei ist die Anordnung so getroffen, dass bei einer derartigen Befestigung die ersten und zweiten Klemmleisten 8a, 8b die dann auf der Innenseite 4c der Aufnahmeelemente 4 aufliegende Seiherstab-Anordnung 6 von beiden Seiten mit einem Druck quer zu der durch den Pfeil L angedeuteten Längserstreckung der Seiherstäbe beaufschlagen, wodurch die Seiherstäbe, die bislang noch lose angeordnet waren, nunmehr mit Hilfe der ersten und zweiten Klemmleisten 8a, 8b gespannt werden. Dabei wird die erste Klemmleiste 8a am ersten Endabschnitt 4aa der Aufnahmeelemente 4 derart befestigt, dass die erste Klemmleiste 8a im Wesentlichen flächig auf dem ersten Endabschnitt 4aa aufliegt, was gleichermaßen auch für die zweite Klemmleiste 8b im Hinblick auf den zweiten Endabschnitt 4bb der Aufnahmeelemente 4 gilt.

Wie Fig. 1 ferner erkennen lässt, sind zwei sog. Verbindungselemente 10 vorgesehen, die im dargestellten Ausführungsbeispiel aus länglichen, geraden Stäben mit einem freien ersten Ende 10a und einem gegenüberliegenden freien zweiten Ende 10b bestehen. Die freien Enden 10a, 10b der stabförmigen Verbindungselemente 10 sind jeweils mit einer Bohrung 12 versehen, die jeweils mit einer in der ersten bzw. zweiten Klemmleiste 8a, 8b ausgebildeten Bohrung 14 und einer im ersten bzw. zweiten Endabschnitt 4aa, 4bb entsprechend ausgebildeten Bohrung 16 fluchtet. Während es sich im dargestellten Ausführungsbeispiel bei den Bohrungen 12 und 14 um Durchgangsbohrungen handelt, sind die Bohrungen 16 als Gewindebohrungen ausgebildet. Wie Fig. 1 ferner schematisch erkennen lässt, sind Schrauben 18 vorgesehen, die jeweils durch eine Bohrung 12 und eine mit dieser fluchtenden Bohrung 14 gesteckt und mit einer zu diesen beiden Bohrungen 12, 14 fluchtenden Gewindebohrung 16 in Schraubeingriff bringbar ist. Dadurch lassen sich nicht nur die beiden Verbindungselemente 10 an den ersten und zweiten Klemmleisten 8a, 8b montieren, sondern gleichzeitig auch die ersten und zweiten Klemmleisten 8a, 8b an den ersten und zweiten Endabschnitte 4aa, 4bb der Aufnahmeelemente 4 befestigen, wobei im dargestellten Ausführungsbeispiel im Ergebnis die Verbindungselemente 10 mit ihren freien Enden 10a, 10b mit Hilfe der Schrauben 18 direkt an den ersten und zweiten Endabschnitten 4aa, 4bb der Aufnahmeelemente 4 befestigt werden und dadurch die ersten bzw. zweiten Klemmleisten 8a, 8b zwischen den freien Enden 10a bzw. 10b der Verbindungselemente 10 und dem ersten bzw. zweiten Endabschnitt 4aa, 4bb der Aufnahmeelemente 4 eingeklemmt werden. Mit Hilfe der Verbindungselemente 10 lässt sich somit bevorzugt die gesamte Seiherkorbeinlage 2 stabilisieren. Wie Fig. 1 ferner erkennen lässt, weisen die ersten und zweiten Klemmleisten 8a, 8b jeweils noch zusätzliche Bohrungen 20 und die ersten und zweiten Endabschnitte 4aa, 4bb der Aufnahmeelemente 4 zusätzliche Bohrungen 22 auf, wobei jeweils eine Bohrung 20 mit einer Bohrung 22 fluchtet. Ferner sind zusätzliche Schrauben 24 vorgesehen, von denen jede Schraube durch eine Bohrung 20 und eine mit dieser fluchtende Bohrung 22 gesteckt wird, wie Fig. 1 des Weiteren schematisch erkennen lässt. Bei Montage der in Fig. 1 dargestellten Seiherkorbeinlage 2 in einem Seiherkorbabschnitt einer Schneckenpresse werden die jeweils durch eine Bohrung 20 und eine mit dieser fluchtende Bohrung 22 gesteckten Schrauben 24 in Schraubeingriff mit einer am Seiherkorbabschnitt vorgesehenen Gewindebohrung gebracht, um somit die Seiherkorbeinlage 2 an einem gewünschten Seiherkorbabschnitt zu befestigen. Dabei wird mit Hilfe der Schrauben 24 die erste Klemmleiste 8a gegen den ersten Endabschnitt 4aa der Aufnahmeelemente 4 und dieser dann gegen einen Abschnitt des Schneckenpressengehäuses im Bereich des Seiherkorbabschnittes und in gleicher Weise die zweite Klemmleiste 8b gegen den zweiten Endabschnitt 4bb der Aufnahmeelemente 4 und dieser wiederum gegen einen Abschnitt des Schneckenpressengehäuses im Bereich des Seiherkorbabschnittes gedrückt. Somit dienen die ersten und zweiten Endabschnitte 4aa, 4bb der Aufnahmeelemente 4 zugleich auch als flanschartige Korbeinlage zur Befestigung am Seiherkorbabschnitt.

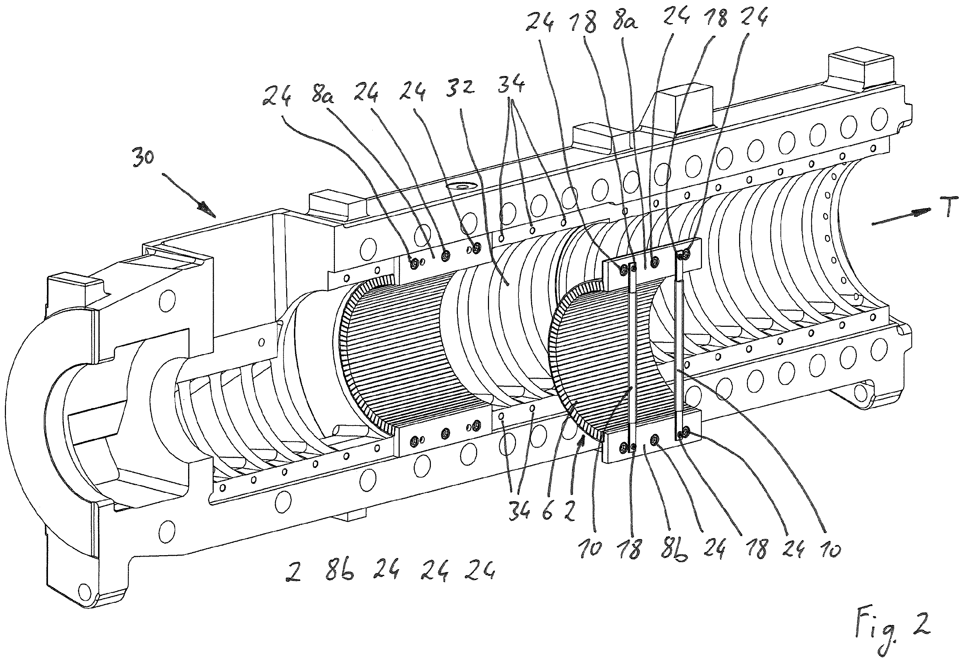

Wenn die in Fig. 1 dargestellte Seiherkorbeinlage 2 fertig bestückt worden ist, kann sie in einen Seiherkorbabschnitt in einem Schneckenpressengehäuse eingebaut werden. In diesem Zustand sind zwar die ersten und zweiten Klemmleisten 8a, 8b und die beiden Verbindungselemente 10 mit Hilfe der Schrauben 18 an den ersten und zweiten Endabschnitten 4aa, 4bb der Aufnahmeelemente 4 befestigt und ggf. auch schon bereits die Schrauben 24 durch die Bohrungen 20 und 22 gesteckt, jedoch sind die Schrauben 24 in diesem Zustand noch wirkungslos. Denn zunächst wird die mit der Seiherstab-Anordnung 6 fertig bestückte und nun als stabile transportable Einheit vorliegende Seiherkorbeinlage 2 mit Hilfe der nun gleichzeitig als Griffe zu verwendenden Verbindungselemente 10 an einer vorbestimmten Stelle den Seiherkorbabschnitt gelegt. Dies ist schematisch in Fig. 2 dargestellt, in der die Hälfte 30 eines Gehäuses für eine Schneckenpresse abgebildet ist, an deren Innenseite ein Seiherkorbabschnitt 32 zur Aufnahme von Seiherkorbeinlagen 2 in der in Fig. 1 dargestellten Ausführung ausgebildet ist. Im Bereich des Seiherkorbabschnittes 32 sind an der Innenseite der Gehäusehälfte 30 Gewindebohrungen 34 ausgebildet, mit denen die zuvor erwähnten Schrauben 24 in Schraubeingriff zu bringen sind, um die Seiherkorbeinlage 2 am Seiherkorbabschnitt 32 zu befestigen. Dabei erfolgt der Einbau der Seiherkorbeinlagen 2 in einer solchen Orientierung, dass die in den Figuren nicht erkennbar gezeigte Außenseite der Aufnahmeelemente 4 auf den Seiherkorbabschnitt 32 gerichtet sind, wie Fig. 2 erkennen lässt. Nach Montage der Seiherkorbeinlage 2 im Seiherkorbabschnitt 32 werden die Verbindungselemente 10 abgenommen, wozu die zugehörigen Schrauben 18 entfernt werden müssen. Erst nach Abnahme der Verbindungselemente 10 ist die mit der Seiherstab-Anordnung 6 bestückte Seiherkorbeinlage 2 betriebsbereit, da ansonsten die Verbindungselemente 10 einer noch innerhalb des Gehäuses anzuordnenden Schnecke im Wege stehen würden.

In Fig. 2 ist die rechte Seiherkorbeinlage 2 in einem Zustand vor oder während eines Einbaus oder Ausbaus dargestellt, wozu diese Seiherkorbeinlage 2 noch mit den Verbindungselementen 10 versehen ist, während sich die in der Ansicht von Fig. 2 linke Seiherkorbeinlage 2 nicht nur im montierten, sondern aufgrund der bereits erfolgten Abnahme der Verbindungselemente 10 auch im betriebsbereiten Zustand befindet.

Wie Fig. 2 schließlich ferner erkennen lässt, ist die Ausrichtung der Seiherkorbeinlage 2 und der darin befindlichen Seiherstab-Anordnung 6 so getroffen, dass sich die einzelnen Seiherstäbe der Seiherstab-Anordnung 6 in Förderrichtung erstrecken, welche in Fig. 2 durch den Pfeil "T" gekennzeichnet ist und hinsichtlich der Orientierung mit der Orientierung des in Fig. 1 gezeigten Pfeils L übereinstimmt, der ja die Richtung der Längserstreckung der Seiherstäbe repräsentiert.

Zum Ausbau der Seiherkorbeinlage 2, beispielsweise für einen Wechsel oder zu Wartungszwecken, sollten dann zunächst die Verbindungselemente 10 wieder montiert und die Schrauben 24 entfernt werden.

## Patentansprüche

1. Vorrichtung zur Anordnung von Seiherstäben innerhalb eines in einem Kompressionsraum einer Presse mit einer Schnecke für die Verarbeitung von tierischem und/oder pflanzlichem Material zu Fleischmehl und/oder Tierfett u.dgl. vorgesehenen Seiherkorbabschnittes (32),
mit mindestens einem Aufnahmeelement (4), das eine Außenseite, die zur Anordnung im Seiherkorbabschnitt (32) ausgebildet ist, eine Innenseite (4c), die zur Aufnahme einer Seiherstab-Anordnung (6) aus einer Mehrzahl von quer zu ihrer Längserstreckung (L) nebeneinander liegenden Seiherstäben ausgebildet ist, und ein erstes Ende (4a) und ein zweites Ende (4b) aufweist, wobei die ersten und zweiten Enden (4a, 4b) in einer Richtung winklig oder quer zur Längserstreckung (L) der von der Innenseite (4c) des mindestens einen Aufnahmeelementes (4) aufzunehmenden Seiherstäbe voneinander beabstandet sind, und
mit einem ersten Klemmelement (8a) und einem zweiten Klemmelement (8b), wobei am ersten Ende (4a) des mindestens einen Aufnahmeelementes (4) das erste Klemmelement (8a) und am zweiten Ende (4b) des mindestens einen Aufnahmeelementes (4) das zweite Klemmelement (8b) derart befestigbar ist, dass das erste Klemmelement (8a) mit einem ersten außenliegenden Seiherstab (6a), der ein erstes Ende der von der Innenseite (4c) des mindestens einen Aufnahmeelementes (4) aufzunehmenden Seiherstab-Anordnung (6) bildet, in Eingriff bringbar ist und das zweite Klemmelement (8b) mit einem zweiten außenliegenden Seiherstab (6b), der ein vom ersten Ende der Seiherstab-Anordnung (6) entfernt gelegenes zweites Ende der von der Innenseite (4c) des mindestens einen Aufnahmeelementes (4) aufzunehmenden Seiherstab-Anordnung (6) bildet, in Eingriff bringbar ist und dabei die ersten und zweiten Klemmelemente (8a, 8b) die von der Innenseite (4c) des mindestens einen Aufnahmeelementes (4) aufzunehmenden Seiherstab-Anordnung (6) mit einem Druck in einer Richtung winklig oder quer zur Längserstreckung (L) der Seiherstäbe beaufschlagen, und
mit mindestens einem Verbindungselement (10), das mit einem ersten Abschnitt (10a), vorzugsweise einem ersten Ende, am ersten Klemmelement (8a) und mit einem zweiten Abschnitt (10b), vorzugsweise einem zweiten Ende, am zweiten Klemmelement (8b) lösbar befestigbar ist,
**dadurch gekennzeichnet, dass** das mindestens eine Verbindungselement (10) als Griff ausgebildet ist.

2. Vorrichtung nach Anspruch 1, bei welcher das mindestens eine Aufnahmeelement (4) gekrümmt ist, so dass dessen Außenseite eine konvexe Seite und dessen Innenseite (4c) eine konkave Seite bildet.

3. Vorrichtung nach Anspruch 2, bei welcher das mindestens eine Aufnahmeelement (4) entlang eines Teilkreises, vorzugsweise entlang eines Halbkreises, gekrümmt ist.

4. Vorrichtung nach mindestens einem der vorangegangenen Ansprüche, bei welcher das mindestens eine Aufnahmeelement (4) als flächiges Element und insbesondere als Streifen oder Leiste ausgebildet ist.

5. Vorrichtung nach mindestens einem der vorangegangenen Ansprüche, bei welcher das erste Ende (4a) des mindestens einen Aufnahmeelementes (4) einen ersten Endabschnitt (4aa), an dem das erste Klemmelement (8a) befestigbar ist, und das zweite Ende (4b) des mindestens einen Aufnahmeelementes (4) einen zweiten Endabschnitt (4bb) aufweist, an dem das zweite Klemmelement (8b) befestigbar ist.

6. Vorrichtung nach mindestsens einem der Ansprüche 1 bis 4, bei welcher mehrere Aufnahmeelemente (4) vorgesehen sind, die in Richtung der Längserstreckung (L) der von der Innenseite (4c) der Aufnahmeelemente (4) aufzunehmenden Seiherstäbe nebeneinander angeordnet und an ihrem ersten Ende (4a) über einen gemeinsamen ersten Endabschnitt (4aa) und an ihrem zweiten Ende (4b) über einen gemeinsamen zweiten Endabschnitt (4bb) miteinander verbunden sind und das erste Klemmelement (8a) am gemeinsamen ersten Endabschnitt (4aa) und das zweite Klemmelement (8b) am gemeinsamen zweiten Endabschnitt (4bb) befestigbar ist.

7. Vorrichtung nach Anspruch 5 oder 6, bei welcher sich der erste Endabschnitt (4aa) und der zweite Endabschnitt (4bb) jeweils über die Außenseite des Aufnahmeelementes (4) hinaus flanschartig nach außen erstreckt.

8. Vorrichtung nach einem der Ansprüche 5 bis 7, bei welcher sich der erste Endabschnitt (4aa) und der zweite Endabschnitt (4bb) in Richtung der Längserstreckung (L) der von der Innenseite (4c) des Aufnahmeelementes (4) aufzunehmenden Seiherstäbe erstreckt.

9. Vorrichtung nach einem der Ansprüche 5 bis 8, bei welcher der erste Endabschnitt (4aa) und der zweite Endabschnitt (4bb) jeweils als flächiges Element ausgebildet sind und insbesondere die Form einer Leiste haben.

10. Vorrichtung nach mindestens einem der vorangegangenen Ansprüche, bei welcher sich das erste Klemmelement (8a) und das zweite Klemmelement (8b) in Richtung der Längserstreckung (L) der von der Innenseite (4c) des Aufnahmeelementes aufzunehmenden Seiherstäbe erstrecken.

11. Vorrichtung nach mindestens einem der vorangegangenen Ansprüche, **dadurch gekennzeichnet, dass** das erste Klemmelement (8a) und das zweite Klemmelement (8b) jeweils als flächiges Element ausgebildet sind und insbesondere die Form einer Leiste haben.

12. Vorrichtung nach mindestens einem der vorangegangenen Ansprüche, bei welcher das erste Klemmelement (8a) und das zweite Klemmelement (8b) jeweils erste Befestigungsmittel (20) zur lösbaren Befestigung der Vorrichtung (2) am Seiherkorbabschnitt (32) aufweisen.

13. Vorrichtung nach Anspruch 12, bei welcher das erste Ende (4a) und das zweite Ende (4b) des mindestens einen Aufnahmeelementes (4) jeweils zweite Befestigungsmittel (22) aufweisen, die zur lösbaren Befestigung der Vorrichtung am Seiherkorbabschnitt (32) mit den ersten Befestigungsmitteln (20) des ersten Klemmelementes (8a) und des zweiten Klemmelementes (8b) zusammenwirken.

14. Vorrichtung nach einem der Ansprüche 5 bis 9 sowie nach Anspruch 12, bei welcher der erste Endabschnitt (4aa) und der zweite Endabschnitt (4bb) des mindestens einen Aufnahmeelementes (4) jeweils zweite Befestigungsmittel (22) aufweisen, die zur lösbaren Befestigung der Vorrichtung (2) am Seiherkorbabschnitt (32) mit den ersten Befestigungsmitteln (20) des ersten Klemmelementes (8a) und des zweiten Klemmelementes (8b) zusammenwirken.

15. Vorrichtung nach Anspruch 13 oder 14, bei welcher die ersten Befestigungsmittel (20) und die zweiten Befestigungsmittel (22) jeweils Bohrungen aufweisen, die so angeordnet sind, dass zur lösbaren Befestigung der Vorrichtung (2) am Seiherkorbabschnitt (32) jeweils eine Bohrung der ersten Befestigungsmittel (20) und eine Bohrung der zweiten Befestigungsmittel (22) in fluchtende Ausrichtung miteinander für eine gemeinsamen Aufnahme eines Befestigungselementes (24), insbesondere einer Schraube, zur lösbaren Befestigung am Seiherkorbabschnitt (32) bringbar ist.

16. Vorrichtung nach mindestens einem der vorangegangenen Ansprüche, bei welcher das mindestens eine Verbindungselement (10) als länglicher Stab ausgebildet ist.

17. Vorrichtung nach mindestens einem der vorangegangenen Ansprüche, bei welcher das mindestens eine Verbindungselement (10) dritte Befestigungsmittel (12), das erste Klemmelement (8a) und das zweite Klemmelement (8b) jeweils vierte Befestigungsmittel (14) und das erste Ende und das zweite Ende des mindestens einen Aufnahmeelementes (4) jeweils fünfte Befestigungsmittel aufweisen, wobei die dritten bis fünften Befestigungsmittel miteinander zusammenwirken, um nicht nur das mindestens eine Verbindungselement (10) am ersten Klemmelement (8a) und am zweiten Klemmelement (8b), sondern gleichzeitig auch noch das erste Klemmelement (8a) am ersten Ende (4a) und das zweite Klemmelement am zweiten Ende (4b) des mindestens einen Aufnahmeelementes (4) lösbar zu befestigen.

18. Vorrichtung nach einem der Ansprüche 5 bis 9 sowie nach mindestens einem der Ansprüche 1 bis 4 und 10 bis 16, bei welcher das mindestens eine Verbindungselement (10) dritte Befestigungsmittel (12), das erste Klemmelement (8a) und das zweite Klemmelement (8b) jeweils vierte Befestigungsmittel (14) und der erste Endabschnitt (4aa) und der zweite Endabschnitt (4bb) des mindestens einen Aufnahmeelementes (4) jeweils fünfte Befestigungsmittel (16) aufweisen, wobei die dritten bis fünften Befestigungsmittel (12, 14, 16) miteinander zusammenwirken, um nicht nur das mindestens eine Verbindungselement (10) am ersten Klemmelement (8a) und am zweiten Klemmelement (8b), sondern gleichzeitig auch noch das erste Klemmelement (8a) am ersten Endabschnitt (4aa) und das zweite Klemmelement am zweiten Endabschnitt (4bb) des mindestens einen Aufnahmeelementes (4) lösbar zu befestigen.

19. Vorrichtung nach Anspruch 17 oder 18, bei welcher die dritten Befestigungsmittel (12), die vierten Befestigungsmittel (14) und die fünften Befestigungsmittel (16) jeweils Bohrungen aufweisen, die so angeordnet sind, dass zur lösbaren Befestigung des mindestens einen Verbindungselementes (10) an den ersten und zweiten Klemmelementen (8a, 8b) sowie gleichzeitig der ersten und zweiten Klemmelemente (8a, 8b) an dem mindestens einen Aufnahmeelement (4) jeweils eine Bohrung der dritten Befestigungsmittel (12), eine Bohrung der vierten Befestigungsmittel (14) und eine Bohrung der fünften Befestigungsmittel (16) in fluchtende Ausrichtung miteinander für eine gemeinsame Aufnahme eines Befestigungselementes (18), insbesondere einer Schraube, zur lösbaren Befestigung des mindestens einen Verbindungselementes (10) an den ersten und zweiten Klemmelementen (8a, 8b) und gleichzeitig der ersten und zweiten Klemmelemente (8a, 8b) an dem mindestens einen Aufnahmeelement (4) bringbar sind.

20. Vorrichtung nach Anspruch 19, bei welcher die Bohrungen der dritten Befestigungsmittel (12) und der vierten Befestigungsmittel (14) als Durchgangsbohrungen und die Bohrungen der fünften Befestigungsmittel (16) als Gewindebohrungen für den Schraubeingriff eines als Schraube vorgesehenen Befestigungselementes (18) ausgebildet sind.

## Claims

1. Device for arranging press bars within a press cage section (32) provided in a compression space of a press with a screw for processing animal and/or plant material into meat meal and/or animal fat and the like,
having at least one receiving element (4) which has an outer side, which is formed to be arranged in the press cage section (32), and an inner side (4c), which is formed to receive a press bar arrangement (6) made of a plurality of press bars located next to one another transversely to their longitudinal extension (L), and a first end (4a) and a second end (4b), wherein the first and second ends (4a, 4b) are spaced apart from one another in a direction at an angle or transversely to the longitudinal extension (L) of the press bars to be received by the inner side (4c) of the at least one receiving element (4), and
having a first clamping element (8a) and a second clamping element (8b), wherein the first clamping element (8a) is fastenable to the first end (4a) of the at least one receiving element (4) and the second clamping element (8b) is fastenable to the second end (4b) of the at least one receiving element (4) in such manner that the first clamping element (8a) can be moved into engagement with a first outer press bar (6a) which forms a first end of the press bar arrangement (6) to be received by the inner side (4c) of the at least one receiving element (4) and the second clamping element (8b) can be moved into engagement with a second outer press bar (6b) which forms a second end of the press bar arrangement (6) to be received by the inner side (4c) of the at least one receiving element (4) and said second end being located remote from the first end of the press bar arrangement (6) and in this case the first and second clamping elements (8a, 8b) apply a pressure to the press bar arrangement (6) to be received by the inner side (4c) of the at least one receiving element (4) in a direction at an angle or transversely to the longitudinal extension (L) of the press bars, and
having at least one connecting element (10) which is detachably fastenable to a first section (10a), preferably to a first end, on the first clamping element (8a), and to a second section (10b), preferably to a second end, on the second clamping element (8b),
**characterised in that** the at least one connecting element (10) is formed as a handle.

2. Device according to claim 1, in which the at least one receiving element (4) is curved such that its outer side forms a convex side and its inner side (4c) a concave side.

3. Device according to claim 2, in which the at least one receiving element (4) is curved along a pitch circle, preferably along a semi-circle.

4. Device according to at least one of the preceding claims, in which the at least one receiving element (4) is formed as a flat element and in particular as a band or strip.

5. Device according to at least one of the preceding claims, in which the first end (4a) of the at least one receiving element (4) has a first end section (4aa), to which the first clamping element (8a) is fastenable, and the second end (4b) of the at least one receiving element (4) has a second end section (4bb), to which the second clamping element (8b) is fastenable.

6. Device according to at least one of claims 1 to 4, in which a plurality of receiving elements (4) are provided which are arranged next to one another in the direction of the longitudinal extension (L) of the press bars to be received by the inner side (4c) of the receiving elements (4) and are connected to one another at their first end (4a) via a common first end section (4aa) and at their second end (4b) via a common second end section (4bb) and the first clamping element (8a) is fastenable to the common first end section (4aa) and the second clamping element (8b) to the common second end section (4bb).

7. Device according to claim 5 or 6, in which the first end section (4aa) and the second end section (4bb) each extend outwardly in a flange-like manner beyond the outer side of the receiving element (4).

8. Device according to any one of claims 5 to 7, in which the first end section (4aa) and the second end section (4bb) extends in the direction of the longitudinal extension (L) of the press bars to be received by the inner side (4c) of the receiving element (4).

9. Device according to any one of claims 5 to 8, in which the first end section (4aa) and the second end section (4bb) are each formed as a flat element and in particular have the shape of a strip.

10. Device according to at least one of the preceding claims, in which the first clamping element (8a) and the second clamping element (8b) extend in the direction of longitudinal extension (L) of the press bars to be received by the inner side (4c) of the receiving element.

11. Device according to at least one of the preceding claims, **characterised in that** the first clamping element (8a) and the second clamping element (8b) are each formed as a flat element and in particular have the shape of a strip.

12. Device according to at least one of the preceding claims, in which the first clamping element (8a) and the second clamping element (8b) each have first fastening means (20) for detachably fastening the device (2) to the press cage section (32).

13. Device according to claim 12, in which the first end (4a) and the second end (4b) of the at least one receiving element (4) each have second fastening means (22) which cooperate with the first fastening means (20) of the first clamping element (8a) and of the second clamping element (8b) to detachably fasten the device to the press cage section (32).

14. Device according to any one of claims 5 to 9 and according to claim 12, in which the first end section (4aa) and the second end section (4bb) of the at least one receiving element (4) each have second fastening means (22) which cooperate with the first fastening means (20) of the first clamping element (8a) and of the second clamping element (8b) to detachably fasten the device (2) to the press cage section (32).

15. Device according to claim 13 or 14, in which the first fastening means (20) and the second fastening means (22) each have boreholes which are arranged such that, in order to detachably fasten the device (2) to the press cage section (32), in each case a borehole of the first fastening means (20) and a borehole of the second fastening means (22) can be moved into flush alignment with one another to jointly receive a fastening element (24), in particular a screw, for detachable fastening to the press cage section (32).

16. Device according to at least one of the preceding claims, in which the at least one connecting element (10) is formed as an elongated bar.

17. Device according to at least one of the preceding claims, in which the at least one connecting element (10) has third fastening means (12), the first clamping element (8a) and the second clamping element (8b) each have fourth fastening means (14) and the first end and the second end of the at least one receiving element (4) each have fifth fastening means, wherein the third to fifth fastening means cooperate with one another so as to detachably fasten not only the at least one connecting element (10) to the first clamping element (8a) and to the second clamping element (8b), but at the same time to also detachably fasten the first clamping element (8a) to the first end (4a) and the second clamping element to the second end (4b) of the at least one receiving element (4).

18. Device according to any one of claims 5 to 9 and according to at least one of claims 1 to 4 and 10 to 16, in which the at least one connecting element (10) has third fastening means (12), the first clamping element (8a) and the second clamping element (8b) each have fourth fastening means (14) and the first end section (4aa) and the second end section (4bb) of the at least one receiving element (4) each have fifth fastening means (16), wherein the third to fifth fastening means (12, 14, 16) cooperate with one another so as to detachably fasten not only the at least one connecting element (10) to the first clamping element (8a) and to the second clamping element (8b), but at the same time to also detachably fasten the first clamping element (8a) to the first end section (4aa) and the second clamping element to the second end section (4bb) of the at least one receiving element (4).

19. Device according to claim 17 or 18, in which the third fastening means (12), the fourth fastening means (14) and the fifth fastening means (16) each have boreholes which are arranged such that, in order to detachably fasten the at least one connecting element (10) to the first and second clamping elements (8a, 8b) as well as at the same time to detachably fasten the first and second clamping elements (8a, 8b) to the at least one receiving element (4), in each case a borehole of the third fastening means (12), a borehole of the fourth fastening means (14) and a borehole of the fifth fastening means (16) can be moved into flush alignment with one another to jointly receive a fastening element (18), in particular a screw, to detachably fasten the at least one connecting element (10) to the first and second clamping elements (8a, 8b) and at the same time to detachably fasten the first and second clamping elements (8a, 8b) to the at least one receiving element (4).

20. Device according to claim 19, in which the boreholes of the third fastening means (12) and of the fourth fastening means (14) are formed as through-boreholes and the boreholes of the fifth fastening means (16) as threaded boreholes for the screw engagement of a fastening element (18) provided as a screw.

## Revendications

1. Dispositif pour agencer des barres de tamis à l'intérieur d'une section de cage filtrante (32) prévue dans un espace de compression d'une presse avec une vis sans fin pour la transformation de matériau d'origine animale et/ou végétale en farine de viande et/ou en graisse animale et similaire,
avec au moins un élément de réception (4), qui présente un côté extérieur, qui est réalisé pour être agencé dans la section de cage filtrante (32), un côté intérieur (4c), qui est réalisé pour recevoir un ensemble de barres de tamis (6) composé d'une multitude de barres de tamis situés côte à côte de manière transversale par rapport à leur extension longitudinale (L), et une première extrémité (4a) et une deuxième extrémité (4b), dans lequel les premières et deuxièmes extrémités (4a, 4b) sont tenues à distance les unes des autres dans une direction de manière angulaire ou de manière transversale par rapport à l'extension longitudinale (L) des barres de tamis à recevoir par le côté intérieur (4c) de l'au moins un élément de réception (4), et
avec un premier élément de serrage (8a) et un deuxième élément de serrage (8b), dans lequel le premier élément de serrage (8a) peut être fixé sur la première extrémité (4a) de l'au moins un élément de réception (4) et le deuxième élément de serrage (8b) peut être fixé sur la deuxième extrémité (4b) de l'au moins un élément de réception (4) de telle manière que le premier élément de serrage (8a) peut être amené en prise avec une première barre de tamis (6a) située à l'extérieur, qui forme une première extrémité de l'ensemble de barres de tamis (6) à recevoir par le côté intérieur (4c) de l'au moins un élément de réception (4) et le deuxième élément de serrage (8b) peut être amené en prise avec une deuxième barre de tamis (6b) située à l'extérieur, qui forme une deuxième extrémité, placée de manière éloignée de la première extrémité de l'ensemble de barres de tamis (6), de l'ensemble de barres de tamis (6) à recevoir par le côté intérieur (4c) de l'au moins un élément de réception (4) et ce faisant les premiers et deuxièmes éléments de serrage (8a, 8b) soumettent l'ensemble de barres de tamis (6) à recevoir par le côté intérieur (4c) de l'au moins un élément de réception (4) à l'action d'une pression dans une direction de manière angulaire ou de manière transversale par rapport à l'extension longitudinale (L) des barres de tamis, et
avec au moins un élément de liaison (10), qui peut être fixé de manière amovible par une première section (10a), de préférence une première extrémité, sur le premier élément de serrage (8a) et par une deuxième section (10b), de préférence une deuxième extrémité, sur le deuxième élément de serrage (8b),
**caractérisé en ce que** l'au moins un élément de liaison (10) est réalisé en tant que poignée.

2. Dispositif selon la revendication 1, où l'au moins un élément de réception (4) est incurvé de sorte que son côté extérieur forme un côté convexe et son côté intérieur (4c) forme un côté concave.

3. Dispositif selon la revendication 2, où l'au moins un élément de réception (4) est incurvé le long d'un cercle partiel, de préférence le long d'un demicercle.

4. Dispositif selon au moins l'une quelconque des revendications précédentes, où l'au moins un élément de réception (4) est réalisé en tant qu'élément plat et en particulier en tant que bande ou baguette.

5. Dispositif selon au moins l'une quelconque des revendications précédentes, où la première extrémité (4a) de l'au moins un élément de réception (4) présente une première section d'extrémité (4aa) , sur laquelle le premier élément de serrage (8a) peut être fixé, et la deuxième extrémité (4b) de l'au moins un élément de réception (4) présente une deuxième section d'extrémité (4bb), sur laquelle le deuxième élément de serrage (8b) peut être fixé.

6. Dispositif selon au moins l'une quelconque des revendications 1 à 4, où sont prévus plusieurs éléments de réception (4), qui sont disposés côte à côte en direction de l'extension longitudinale (L) des barres de tamis à recevoir par le côté intérieur (4c) des éléments de réception (4) et sont reliés entre eux sur leur deuxième extrémité (4b) par l'intermédiaire d'une deuxième section d'extrémité commune (4bb), et le premier élément de serrage (8a) peut être fixé sur la première section d'extrémité commune (4aa) et le deuxième élément de serrage (8b) peut être fixé sur la deuxième section d'extrémité commune (4bb).

7. Dispositif selon la revendication 5 ou 6, où la première section d'extrémité (4aa) et la deuxième section d'extrémité (4bb) s'étendent vers l'extérieur à la manière de bride respectivement au-delà du côté extérieur de l'élément de réception (4).

8. Dispositif selon l'une quelconque des revendications 5 à 7, où la première section d'extrémité (4aa) et la deuxième section d'extrémité (4bb) s'étendent en direction de l'extension longitudinale (L) des barres de tamis à recevoir par le côté intérieur (4c) de l'élément de réception (4).

9. Dispositif selon l'une quelconque des revendications 5 à 8, où la première section d'extrémité (4aa) et la deuxième section d'extrémité (4bb) sont réalisées respectivement en tant qu'élément plat et ont en particulier la forme d'une baguette.

10. Dispositif selon au moins l'une quelconque des revendications précédentes, où le premier élément de serrage (8a) et le deuxième élément de serrage (8b) s'étendent en direction de l'extension longitudinale (L) des barres de tamis à recevoir par le côté intérieur (4c) de l'élément de réception.

11. Dispositif selon au moins l'une quelconque des revendications précédentes, **caractérisé en ce que** le premier élément de serrage (8a) et le deuxième élément de serrage (8b) sont réalisés respectivement en tant qu'élément plat et ont en particulier la forme d'une baguette.

12. Dispositif selon au moins l'une quelconque des revendications précédentes, où le premier élément de serrage (8a) et le deuxième élément de serrage (8b) présentent respectivement des premiers moyens de fixation (20) pour fixer de manière amovible le dispositif (2) sur la section de cage filtrante (32).

13. Dispositif selon la revendication 12, où la première extrémité (4a) et la deuxième extrémité (4b) de l'au moins un élément de réception (4) présentent respectivement des deuxièmes moyens de fixation (22), qui coopèrent, pour fixer de manière amovible le dispositif sur la section de cage filtrante (32), avec les premiers moyens de fixation (20) du premier élément de serrage (8a) et du deuxième élément de serrage (8b).

14. Dispositif selon l'une quelconque des revendications 5 à 9 ainsi que selon la revendication 12, où la première section d'extrémité (4aa) et la deuxième section d'extrémité (4bb) de l'au moins un élément de réception (4) présentent respectivement des deuxièmes moyens de fixation (22), qui coopèrent, pour fixer de manière amovible le dispositif (2) sur la section de cage filtrante (32), avec les premiers moyens de fixation (20) du premier élément de serrage (8a) et du deuxième élément de serrage (8b).

15. Dispositif selon la revendication 13 ou 14, où les premiers moyens de fixation (20) et les deuxièmes moyens de fixation (22) présentent respectivement des alésages, qui sont disposés de telle sorte que pour fixer de manière amovible le dispositif (2) sur la section de cage filtrante (32), respectivement un alésage des premiers moyens de fixation (20) et un alésage des deuxièmes moyens de fixation (22) peuvent être amenés selon une orientation alignée entre eux pour une réception commune d'un élément de fixation (24), en particulier d'une vis, pour la fixation amovible sur la section de cage filtrante (32).

16. Dispositif selon au moins l'une quelconque des revendications précédentes, où l'au moins un élément de liaison (10) est réalisé en tant que barre allongée.

17. Dispositif selon au moins l'une quelconque des revendications précédentes, où l'au moins un élément de liaison (10) présente des troisièmes moyens de fixation (12), le premier élément de serrage (8a) et le deuxième élément de serrage (8b) présentent respectivement des quatrièmes moyens de fixation (14) et la première extrémité et la deuxième extrémité de l'au moins un élément de réception (4) présentent respectivement des cinquièmes moyens de fixation, dans lequel les troisièmes aux cinquièmes moyens de fixation coopèrent les uns avec les autres pour fixer de manière amovible non seulement l'au moins un élément de liaison (10) sur le premier élément de serrage (8a) et sur le deuxième élément de serrage (8b), mais également simultanément le premier élément de serrage (8a) sur la première extrémité (4a) et le deuxième élément de serrage sur la deuxième extrémité (4b) de l'au moins un élément de réception (4) .

18. Dispositif selon l'une quelconque des revendications 5 à 9 ainsi que selon au moins l'une quelconque des revendications 1 à 4 et 10 à 16, où l'au moins un élément de liaison (10) présente des troisièmes moyens de fixation (12), le premier élément de serrage (8a) et le deuxième élément de serrage (8b) présentent respectivement des quatrièmes moyens de fixation (14) et la première section d'extrémité (4aa) et la deuxième section d'extrémité (4bb) de l'au moins un élément de réception (4) présentent respectivement des cinquièmes moyens de fixation (16), dans lequel les troisièmes aux cinquièmes moyens de fixation (12, 14, 16) coopèrent les uns avec les autres pour fixer de manière amovible non seulement l'au moins un élément de liaison (10) sur le premier élément de serrage (8a) et sur le deuxième élément de serrage (8b), mais également simultanément le premier élément de serrage (8a) sur la première section d'extrémité (4aa) et le deuxième élément de serrage sur la deuxième section d'extrémité (4bb) de l'au moins un élément de réception (4).

19. Dispositif selon la revendication 17 ou 18, où les troisièmes moyens de fixation (12), les quatrièmes moyens de fixation (14) et les cinquièmes moyens de fixation (16) présentent respectivement des alésages qui sont disposés de telle sorte que pour fixer de manière amovible l'au moins un élément de liaison (10) sur les premiers et deuxièmes éléments de serrage (8a, 8b) et simultanément également les premiers et deuxièmes éléments de serrage (8a, 8b) sur l'au moins un élément de réception (4), respectivement un alésage des troisièmes moyens de fixation (12), un alésage des quatrièmes moyens de fixation (14) et un alésage des cinquièmes moyens de fixation (16) peuvent être amenés selon une orientation alignée l'un avec l'autre pour une réception commune d'un élément de fixation (18), en particulier d'une vis, pour la fixation amovible de l'au moins un élément de liaison (10) sur les premiers et deuxièmes éléments de serrage (8a, 8b) et simultanément des premiers et deuxièmes éléments de serrage (8a, 8b) sur l'au moins un élément de réception (4).

20. Dispositif selon la revendication 19, où les alésages des troisièmes moyens de fixation (12) et des quatrièmes moyens de fixation (14) sont réalisés en tant qu'alésages traversants et les alésages des cinquièmes moyens de fixation (16) sont réalisés en tant qu'alésages filetés pour la prise par vissage d'un élément de fixation (18) prévu en tant que vis.
